# EUROPÄISCHE PATENTANMELDUNG

(11) **EP 2 677 167 A2**
(43) Veröffentlichungstag der Anmeldung: **25.12.2013**
(21) Anmeldenummer: 12183672.0
(22) Anmeldetag: 10.09.2012
(51) Int. Cl.: F03D 7/02

(54) **Pitchantrieb für Windenergieanlage**

(30) Priorität: 21.06.2012 EP 12173050
(71) Anmelder: MOOG GmbH, 71034 Böblingen (DE); Moog Unna GmbH, 59423 Unna (DE)
(72) Erfinder: Stehlin, Bernhard, 70771 Leinfelden (DE); Breitholz, Mirko, 21614 Buxtehude (DE); Rösmann, Tobias, 44263 Dortmund (DE)
(74) Vertreter: Jostarndt, Hans-Dieter

(57) **Zusammenfassung**

Die Erfindung betrifft eine Windenergieanlage (1) mit Pitchantrieb (3) zur Rotorblattverstellung, bei der die Antriebregelung (31) des Pitchantriebs (3) auf Störmomente (SM) im Betrieb der Windenergieanlage (1) ausgleichend reagiert und auf ein entsprechendes Verfahren zur Antriebsregelung (31). Die Windenergieanlage (1) umfasst dazu mindestens einen Belastungssensor (4) im Bereich des Pitchantriebs (3) zur Bestimmung einer mechanische Belastung der Antriebsmechanik (A) aufgrund eines Störmoments (SM) angeordnet und zur Aussendung eines der mechanischen Belastung entsprechenden Sensorsignals (SS) vorgesehen ist und die Antriebsregelung (31) ein Rückführungsmittel (311) zur Rückführung (R) eines gemäß des Sensorsignals (SS) bewerteten Drehmomentsignals (BDS) umfasst. Damit kann eine Windenergieanlage mit Rotorblattverstellung bereitgestellt werden, die eine erhöhte Lebensdauer, eine erhöhte Zuverlässigkeit und eine erhöhte Verfügbarkeit aufweist

## Beschreibung

### Gebiet der Erfindung

Die Erfindung bezieht sich auf eine Windenergieanlage mit Pitchantrieb zur Rotorblattverstellung, bei der die Antriebsregelung des Pitchantriebs auf Störmomente im Betrieb der Windenergieanlage ausgleichend reagiert und auf ein entsprechendes Verfahren zur Antriebsregelung.

### Hintergrund der Erfindung

Windenergieanlagen wandeln mit ihren Rotoren die Windenergie in elektrische Energie zur Einspeisung in ein Stromnetz um. Die Rotoren besitzen dazu mindestens ein Rotorblatt, wobei die meisten Windenergieanlagen einen Rotor mit jeweils drei Rotorblättern besitzen. Eine Windenergieanlage besteht im Wesentlichen aus einem Rotor mit Nabe und Rotorblättern sowie einer Maschinengondel, die den Generator und häufig ein Getriebe beherbergt. Die Gondel ist drehbar auf einem Turm gelagert, dessen Fundament die notwendige Standsicherheit gibt. Je nach Windrichtung wird die Gondel so in den Wind gedreht, dass entsprechend viel Windenergie über die Drehung des Rotors im Generator in elektrische Energie umgewandelt werden kann. Die Windenergieanlagen werden von einer Regelelektronik bei ertragsversprechenden Windgeschwindigkeiten größer einer Anlaufgeschwindigkeit angefahren und bei zu großen Windgeschwindigkeiten größer einer Abschaltgeschwindigkeit wieder abgeschaltet. Damit die Rotorblätter gedreht werden können, sind diese in der Nabe drehbar gelagert und werden von einem Pitchantrieb in die gewünschte Stellung gedreht. Das Drehen der Rotorblätter in bzw. aus dem Wind wird dabei "Pitchen" genannt. Die Rotorblätter besitzen dabei je nach Anstellwinkel zum Wind einen größeren oder kleineren Auftrieb, der den Rotor in Drehung versetzt. Durch eine Pitchregelung kann der Rotor auch angehalten werden, indem die Rotorblätter in eine Position gedreht werden, die den Rotor auch bei Wind bis zum Stillstand abbremst. Soll der Rotor im Stillstand verweilen, wird der Anstellwinkel der Rotorblätter so gewählt, dass die Rotorblätter keinen Auftrieb durch den Wind erfahren.

Üblicherweise erfolgt die Drehung der Rotorblätter infolge eines Vergleichs eines Soll-Signals für die gewünschte Rotorblattstellung und eines Ist-Signals, das der momentanen Rotorblattstellung entspricht. Aufgrund dieses Dfferenzsignals wird der Antriebsmotor für die Rotorblattstellung gesteuert, der über die Motorwelle ein Antriebsmoment auf das Getriebe zur Änderung der Rotorblattstellung ausübt. Diesem Antriebsmoment werden äußere Drehmomente vom Rotorblatt aufgrund der angreifenden Windkräfte überlagert, so dass sich ein effektives Antriebsdrehmoment ergibt. Aufgrund von Turbulenzen und Windböen können allerdings kurzfristig stark erhöhte Drehmomente auf die Rotorblattantriebsmechanik wirken. Somit können Belastungsspitzen beim Betrieb einer Windernergieanlage auftreten, die deutlich größer sind, als aus dem Antriebsmoment des Antriebsmotors der Rotorblattverstellung abzuleiten wäre, weil aufgrund der Massenträgheit der Antriebsmechanik und der Reibung im Getriebe starke Kräfte und Verspannungen in der Antriebsmechanik entstehen können. Die Belastungen der Antriebsmechanik der Rotorblattverstellung können sich durch mechanische Resonanzen in den Komponenten der Windenergieanlage und Spiele in den einzelnen Komponenten sogar noch verstärken. Es sind auch Systeme bekannt, die die äußeren Drehmomente aus einer mechanischen Verformung der Rotorblätter ableiten. Hier ist es allerdings schwiering, für eine bessere Steuerung einen direkten Zusammenhang zu den Belastungen und Schwingungen in der Rotorblattverstellungsmechanik abzuleiten. Es wäre daher für eine verbesserte Lebensdauer, Zuverlässigkeit und Verfügbarkeit der Windenergieanlage wünschenswert, wenn eine Rotorblattsteuerung zur Verfügung stehen würde, mit der solche Belastungsspitzen und gegebenenfalls verstärkende Resonanzen vermieden werden könnten.

### Zusammenfassung der Erfindung

Es ist eine Aufgabe der vorliegenden Erfindung, eine Windenergieanlage mit Rotorblattverstellung bereitzustellen, mit der die Lebensdauer, die Zuverlässigkeit und Verfügbarkeit einer solchen Windenergieanlage erhöht wird.

Diese Aufgabe wird gelöst durch eine Windenergieanlage umfassend einen Rotor mit Nabe und mindestens ein um seine Längsachse drehbar in der Nabe gelagertes Rotorblatt, wobei der Anstellwinkel jedes Rotorblatts relativ zum Wind mittels eines über eine Antriebswelle mit dem Rotorblatt verbundenen Pitchantriebs umfassend eine Antriebsregelung, ein Antriebsmotor, ein Pitchgetriebe und damit verbundene weitere Teile der Antriebsmechanik über Ausübung eines einer festgestellten Differenz zwischen einer Soll/Ist-Stellung des Rotorblattes entsprechenden Antriebsmoments auf das Pitchgetriebe eingestellt werden kann, wobei mindestens ein Belastungssensor im Bereich des Pitchantriebs zur Bestimmung einer mechanische Belastung der Antriebsmechanik aufgrund eines Störmoments angeordnet und zur Aussendung eines der mechanischen Belastung entsprechenden Sensorsignals vorgesehen ist und die Antriebsregelung ein Rückführungsmittel zur Rückführung eines gemäß des Sensorsignals bewerteten Drehmomentsignals umfasst.

Um eine Rotoblattverstellung zu ermöglichen, ist das Rotorblatt drehbar in der Nabe gelagert. Die Rotorblattsteuerung zur Steuerung der Rotorblattverstellung umfast hierbei den Pitchantrieb und das Pitchgetriebe. Der Pitchantrieb wird wiederum von einer Antriebsregelung betrieben. Der Bereich des Pitchantriebs bezeichnet eine Umgebung um den Pitchantrieb herum, in dem mittels des Belastungssensors die mechanische Belastung der Antriebsmechanik gemessen werden kann. Der Begriff Antriebsmechanik fast dabei alle Komponenten zusammen, die bei der Drehung der Rotorblätter in der Nabe mitwirken inklusive Pitchgetriebe und Pitchantrieb. Der Belastungssensor kann beispielsweise im Pitchantrieb, am Pitchantrieb oder in der Nähe des Pitchantriebs oder an anderen Teilen der Antriebsmechanik angeordnet sein. Der Belastungssensor kann dabei jeder Sensor sein, der geeignet ist, eine mechanische Belastung einer oder mehrerer Komponente festzustellen. Der hier verwendete Belastungssensor kann beispielsweise ein Drehmoment- oder Kraftsensor sein. Damit steht das Sensorsignal im Zusammenhang mit der mechanischen Belastung von einem oder mehreren Teilen der Antriebsmechanik umfassend den Pitchantrieb. Durch die Rückführung des Sensorsignals wird dieses derart auf die Antriebsregelung aufgeschaltet, dass die Belastungen des Pitchantriebs aufgrund äußere Störmomente wie beispielsweise Windböen oder Turbulenzen zumindest reduziert und Schwingungen im System gedämpft werden. Im Gegensatz zu bekannten Antriebs- und Regelungsverfahren kann hier bei äußeren Störkräften (verursachen die Störmomente) am Rotorblatt trotz Trägheit des Antriebsmotors und des Pitchgetriebes der Pitchantrieb schnell genug der Belastung, insbesondere einer kurzzeitigen hohen Belastung, nachgeben, insbesondere wenn die Störmomente größer als das Antriebsmoment, das der Antriebsmotor über seine Motorwelle aufbringen kann, sind. Auch die sprungartigen Belastungsspitzen bei Richtungsänderungen der Drehmomente bei vorhandenen mechanischen Spielen in dem Pitchantrieb (u.a. im Antriebsmotor und im Pitchgetriebe) werden durch die Rückführung abgemildert, weil der Antriebsmotor den Kräften nachgibt. Dadurch werden zusätzlich vormals schwach gedämpfte mechanische Übertragungselemente ausreichend gedämpft, so dass eventuell auftretende Resonanzen gedämpft und damit die Bauteile geschont werden. Die so vermiedene Stoßbelastung des Pitchantriebs und seiner Antriebsmechanik verlängert die Lebensdauer der einzelnen Bauteile. Dies steigert gleichzeitig die Zuverlässigkeit und Verfügbarkeit einer solchen Windenergieanlage. Die Belastung kann dabei kontinuierlich oder periodisch vom Belastungssensor gemessen und das Sensorsignal entsprechend zum Rückführungsmittel kontinuierlich oder periodisch übertragen werden. Bei einer periodischen Messung / Übertragung sollte dies mit einer genügend hohen Frequenz geschehen, damit ein rechtzeitiges Nachgeben des Antriebsmotors ermöglicht wird.

Eine Windenergieanlage (oder auch Windkraftanlage) zur Umwandlung von Windenergie in elektrische Energie kann dabei an Land oder als sogenannte Offshore-Anlage im Bereich moderater Wassertiefen vor der Küste angeordnet werden. Windenergieanlagen an Land liefern typischerweise bis zu 3MW an elektrischer Energie, sogenannte Offshore-Anlagen können dagegen bis zu 6MW an elektrischer Energie liefern, da sie aufgrund der gegenüber dem Landbetrieb geringeren Restriktionen bzgl. Höhe und Rotorgröße und des höheren Windangebots größer beziehungsweise leistungsstärker sein können. Dafür ist der Wartungsaufwand für Offshore-Anlagen aufgrund ihrer erschwerten Erreichbarkeit höher. Gerade für solche Windenergieanlagen ist ein zuverlässiger Betrieb mit möglichst hoher Verfügbarkeit und Lebensdauer wichtig. Windenergieanlagen können ein einzelnes Rotorblatt oder mehrere Rotorblätter beispielsweise zwei, drei oder vier Rotorblätter umfassen. Typischerweise umfassen Windenergieanlagen drei Rotorblätter, da hier die Lagerung der Nabe und des Rotors am günstigsten zu gestalten ist.

Eine Windenergieanlage umfasst dabei einen Turm zur Halterung der drehbaren Komponenten. Die minimale Höhe des Turms wird unter anderem vom Rotordurchmesser bestimmt. Als Rotordurchmesser wird dabei der Durchmesser der Fläche bezeichnet, innerhalb der die Rotorblätter im Wind rotieren. Windenergieanlagen können sehr unterschiedliche Rotordurchmesser bis mehr als 120m besitzen. Aufgrund der lokalen Windströmungen liefern Anlagen an Land mit höheren Türmen zudem höhere Energien im Vergleich zu Landanlagen mit kleineren Türmen. Auf dem Turm ist eine Gondel drehbar gelagert, wobei die Drehachse der Gondel (Gondel-Drehachse) in der Regel senkrecht zur Erdoberfläche steht. In der Gondel ist der Rotor mit Nabe und Rotorblättern gelagert und mit einem Generator zur Stromerzeugung verbunden. Die Gondel wird daher auch als Maschinengondel bezeichnet. Die Gondel kann zusätzlich ein Getriebe umfassen. Mittels Drehung der Gondel können die Rotorblätter in die günstigste Position zum Wind gebracht werden. Die Windrichtungsnachführung erfolgt bespielsweise durch Stellmotoren, wobei die Windrichtung über sogenannte Windgebungssensoren ermittelt wird. Die elektrische Anbindung der Gondel an das Stromnetz erfolgt in der Regel über fest mit der Gondel verbundene Kabel. Die Nabe bezeichnet den Teil des Rotors, der drehbar auf gleicher Höhe vor der Gondel angeordnet ist und in dem die Rotorblätter befestigt sind. Die Drehachse des Rotors und damit auch der Nabe und der an ihr befestigten Rotorblätter im Windbetrieb steht im Wesentlichen senkrecht zur Gondel-Drehachse. In der Nabe sind für die Drehung des Rotors zur Erzeugung von elektrischer Energie aus der Windenergie ein oder mehrere Rotorblätter gelagert. Das Rotorblatt ist dabei so geformt, dass der auf das Rotorblatt auftreffende Wind einen Auftrieb für das Rotorblatt erzeugt, so dass der Rotor infolge des Auftriebs der Rotorblätter in Drehung versetzt wird. Moderne Rotorblätter besitzen eine flügelähnliche Form und sind in der Regel aus glasfaserverstärktem Kunststoff oder Kohlestofffasern gefertigt. Die Stärke des Auftriebs für die Rotorblätter hängt von deren Anstellwinkel zum Wind ab. Der Anstellwinkel bezeichnet hierbei den Winkel zwischen der Windrichtung und der Oberfläche des flügelförmigen Teils der Rotorblätter. Je nach Bedarf an elektrischer Energie und Stärke des Windes können unterschiedliche Anstellwinkel gewünscht werden. Daher ist das Rotorblatt um seine Längsachse drehbar in der Nabe gelagert. Der einstellbare Anstellwinkel kann außerdem zum Anhalten (Bremsen) und Starten (Beginn der Drehung) des Rotors verwendet werden. Bei für die Energieerzeugung geeigneten Windgeschwindigkeiten wird der vormals stehende Rotor angefahren, bei zu großen Windgeschwindigkeiten wird die Windenergieanlage zum Schutz der Anlage abgeschaltet und der Rotor angehalten. Die Windgeschwindigkeit kann dabei über ein Anemometer ermittelt oder aus der Drehzahl des Rotors und der abgegebenen Leistung abgeleitet werden. Mit einer entsprechenden Steuerung kann dann eine Drehung ("Pitchen") der Rotorblätter entsprechend der ermittelten Windgeschwindigkeit vorgenommen werden. Die Drehung der Rotorblätter erfolgt über einen sogenannten Pitchantrieb, der innerhalb der Nabe angeordnet ist. Die Abbremsung der Anlage kann beispielsweise über einen entsprechenden, die Drehung der Rotorblätter bremsenden Anstellwinkel erreicht oder unterstützt werden. Ist die Windgeschwindigkeit zu gering für einen wirtschaftlichen Betrieb der Anlage oder soll der Rotor im Ruhebetrieb (oder Stillstandsbetrieb) der Windenergieanlage nicht rotieren, wird der Anstellwinkel auf eine Null-Grad-Position zum Wind (Segelstellung) gebracht. Die Veränderung des Anstellwinkels der Rotorblätter durch die Pitchmotoren als Reaktion auf die vorhandenen Windgeschwindigkeiten und den Erzeugungsbedarf an elektrischer Energie wird auch als Pitchregelung bezeichnet. Neben der Gondel, der Nabe, dem Rotor und dem oder den Rotorblättern als den drehbaren Komponenten kann eine Windenergieanlage noch weiter drehbare Komponenten umfassen.

Damit die Pitchantriebe bei einem Netzausfall mit der notwendigen elektrischen Energie versorgt werden, sind sie mit einem oder mehreren Energiespeichern als Energiequelle verbunden. Solche Energiespeicher können beispielsweise Batterien oder Super-Kondensatoren sein. Damit die elektrische Verbindung zu den Pitchantrieben vereinfacht und ein elektrischer Schleifring zur Kontaktierung nicht-rotierender Komponenten vermieden werden kann, sind sowohl die Pitchantriebe als auch die Energiespeicher auf oder in der Nabe oder auf dem Rotor montiert, so dass sowohl die Pitchantriebe als auch die Energiespeicher während des Betriebs der Windenergieanlage mit der Nabe mitrotieren. Im Gegensatz zu nicht-mitrotierenden Energiespeichern kann ein zusätzlicher Schleifring zur elektrischen Kontaktierung der Pitchantriebe vermieden werden.

In einer Ausführungsform ist das Rückführungsmittel zur Beeinflussung eines Antriebsmotorsignals aufgrund des bewerteten Drehmomentsignals für den daraufhin entsprechend reagierenden Antriebsmotor ausgestaltet. Der Antriebsmotor kann dabei je nach den vorliegenden Bedingungen nachgebend oder mit Ausübung eines verstärkten Drehmoments reagieren. Beispielsweise können aus dem Sensorsignal oder aus der Reaktion auf das Sensorsignal oder aus dem bewerteten Drehmomentsignal oder aus der Reaktion auf das bewertete Drehmomentsignal Informationen über die Turbulenzintensität des Windes abgeleitet oder die Messung des Wirkungsgrades beziehungsweise der Energieverluste im Getriebe vorgenommen werden, um auf diese Weise insbesondere den Zustand des Getriebes überwachen zu können. Plötzlich sich erhöhende Energieverluste (durch Reibung) im Getriebe können beispielsweise auf einen bevorstehenden Getriebeschaden hinweisen. Beispielsweise könnten die Belastungen, die über das Sensorsignal gemeldet werden, über eine kurze Zeit beobachtet und die Windenergieanlage zum Schutz der Übertragungsmechanik beispielsweise bei starken Turbulenzen in einen Zustand gefahren werden, bei der die Belastungen verringert werden.

In einer Ausführungsform leitet das Rückführungsmittel aus dem Sensorsignal ein bewertetes Drehmomentsignal unter Berücksichtigung des Störmoments ab und addiert dieses direkt oder indirekt zu einem Drehmoment des Antriebsmotors. Durch die positive Rückführung des Sensorsignals wird bewirkt, dass ein angreifendes Störmoment am Rotorblatt ein gleichgerichtetes Drehmoment am Antriebsmotor entstehen lässt. Damit kann die Spitzenbelastung der Bauteile reduziert werden. Ein weiterer Vorteil wird erreicht, weil durch das Nachgeben des Antriebsmotors auf große äußere Belastungen die Dämpfung der Schwingungen im Pitchantrieb verbessert und damit die Wechselbelastung auf die Bauteile reduziert wird. In einer bevorzugten Ausführungsform wertet das Rückführungsmittel das Sensorsignal frequenz- und amplitudenabhängig aus. Hiermit kann noch präziser auf Spitzenbelstungen, insbesondere kurzzeitige Belastungen mit hoher Amplitude, reagiert werden.

In einer Ausführungsform umfasst das Rückführungsmittel einen separaten Dämpfungsregler. Dadurch wird ebenfalls erreicht, dass der Antriebsmotor den angreifenden Störmomenten soweit nachgibt, dass die Drehmassen durch die Verspannungen in den mechanischen Übertragungselementen weniger oder gar nicht zum Schwingen angeregt werden oder gut gedämpft ausschwingen.

In einer Ausführungsform wird die Differenz zwischen einer Soll/Ist-Stellung des Rotorblattes aus der Stellung der Motorwelle bestimmt und ein Differenzsignal einem Positionsregler in der Antriebsregelung zugeführt. Durch diese Regelung wird erreicht, dass der Antriebsmotor bei einem ansteigenden Störmoment nachgibt. Außerdem werden zusätzliche Sensoren zur Bestimmung der Rotorblattstellung vermieden.

In einer Ausführungsform wird die Differenz zwischen einer Soll/Ist-Stellung des Rotorblattes aus der Stellung des Rotorblattes bestimmt und ein Differenzsignal einem Positionsregler in der Antriebsregelung zugeführt, das Ausgangssignal des Positionsreglers mit dem rückgeführten bewerteten Drehmomentsignal verglichen und einem Drehmomentregler zur Regelung des Antriebsmotors übergeben. Auch durch diese Regelung wird erreicht, dass der Antriebsmotor bei einem ansteigenden Störmoment nachgibt. Erst wenn der Soll-Wert für das Drehmoment ein korrigierendes Signal aus dem Positionsregler erhält, der infolge einer nachgebenden Rotorblattposition gemessen wird, reagiert der Antriebsmotor gegen die Störmomente. Dadurch wird erreicht, dass der Antriebsmotor und das Rotorblatt weitgehend synchron mit einer vorgegebenen Frequenz und gewünschten Dämpfung nachfolgend auf äußere Störmomente reagiert und damit entlastend auf die Übertragungsmechanik der Rotorblattverstellung wirkt.

In einer Ausführungsform umfasst die Antriebsregelung ein Vergleichsmittel, das das Sensorsignal mit einem Motorstrom des Antriebsmotors vergleicht. Der Motorstrom stellt ein Maß für das Drehmoment des Antriebsmotors dar. Bewertet mit den jeweiligen Geschwindigkeitsprofilen des Antriebsmotors kann damit eine Aussage zur Verlustleistung und zum Wirkungsgrad der mechanischen Übertragungsglieder über eine entsprechende Berechnung getroffen werden. Mit Übertragungsgliedern werden alle miteinander verbundenen Komponenten im Pitchantrieb und im Pitchgetriebe bezeichnet.

In einer Ausführungsform ist die Antriebsregelung mit weiteren Regeleinrichtungen der Windenergieanlage zur Bereitstellung des Sensorsignals an diese Regeleinrichtungen verbunden. Dadurch können Regelkonzepte und Reglereinstellungen für eine übergeordnete Regelung (beispielsweise das Anfahren einer Windenergieanlage bei Bedarf an elektrischer Energie in einem Stromnetz) und für die dort anstehenden Regelaufgaben verwendet und diese damit verbessert werden.

In einer Ausführungsform umfasst der Belastungssensor ein oder mehrere Dehnmessstreifen und ist zwischen Antriebsmotor und einer mit der Nabe verbundenen Unterlage des Pitchantriebs angeordnet. Durch diese Anordnung können Reaktionsmomente auf den Pitchantrieb gemessen werden. In einer bevorzugten Ausführungsform umfasst der Belastungssensor dazu einen ersten Flansch zur Befestigung an der Unterlage des Pitchantriebs und einen zweiten Flansch zur Befestigung am Pitchantrieb und Verbindungsstege zwischen dem ersten und zweiten Flansch, auf denen Dehnmesstreifen aufgebracht sind. Mittels der auf den Verbindungsstegen aufgebrachten Dehnmessstreifen, beispielsweise ein Dehnmessstreifen pro Verbindungssteg, wird die Schubdehnung der beiden Flansche relativ zueinander gemessen. Die Schubdehnung ändert sich charakteristisch mit dem Reaktionsmoment des Pitchantriebs auf die Unterlage. Der Fachmann kann im Rahmen der vorliegenden Erfindung auch andere Konstruktionen verwenden. In einer bevorzugten Ausführungsform sind der erste Flansch an der Unterlage des Pitchgetriebes und der zweite Flansch am Pitchgetriebe befestigt. In anderen Ausführungsformen kann der zweite Flansch auch an anderen Komponenten des Pitchantriebs befestigt sein

In einer alternativen Ausführungsform umfasst der Belastungssensor ein oder mehrere Dehnmessstreifen und ist auf der Antriebswelle angeordnet. Dadurch kann ein Ausgangsmoment an der Antriebswelle bestimmt werden. Hier werden beispielsweise vier Dehnmessstreifen als Dehnmessstreifenvollbrücke auf der Antriebswelle aufgebracht, die die Schubdehnung ermitteln, die ein Maß für das Ausgangsmoment auf der Antriebswelle ist. In einer bevorzugten Ausführungsform erfolgen eine elektrische Versorgung der Dehnmessstreifen und der Abgriff des Sensorsignals berührungslos über eine Transformatordrehübertragung. Eine berührungslose Versorgung/Übertragung von einer drehenden Komponente (Antriebswelle) auf eine stehende Komponente (und andersherum) ist vorteilhaft, da diese verschleißfrei erfolgt. Alternativ können die Drehmomente mit einem induktiven Sensor berührungslos erfasst werden. Ein solcher Sensor basiert auf einem anisotropen magnetostriktiven Effekt in ferromagnetischen Antriebswellenoberflächen. Dieser Effekt verursacht in Abhängigkeit von der mechanischen Torsionsspannung an der Messstelle eine unterschiedliche magnetische Permeabilität in Richtung der Drehspannungen und Druckspannungen. Mit dem Sensor wird diese Permeabilitätsänderung gemessen, die in einem großen Messbereich proportional zur Torsionsspannung an der Antriebswellenoberfläche ist. Alternativ kann dies über einen Schleifringüberträger erfolgen. Der Fachmann kann im Rahmen der vorliegenden Erfindung auch andere Kontruktionen verwenden

In einer weiteren alternativen Ausführungsform umfasst der Belastungssensor zwei Drehgeber, wobei der erste Drehgeber am Antriebsmotor und der zweite Drehgeber an der Antriebswelle, im Pitchgetriebe oder am drehenden Teil des Rotorblattes angeordnet sind und die mechanische Belastung aus einem relativen Verdrehwinkel zwischen den Drehgebern bestimmt wird. Bei vorhandenen Drehmomenten am Antrieb entsteht eine elastische Verdrehung zwischen dem Antriebsmotor und der Antriebswelle, die mit Hilfe der beiden Drehgeber gemessen werden kann. Die Differenz der Drehwinkel der beiden Drehgeber enstpricht dem Verdrehwinkel und dient als Maß für die mechanische Belastung des Pitchgetriebes beziehungsweise des Pitchantriebs. In diesem Fall entspricht das Sensorsignal dem Verdrehwinkel. Der Fachmann kann im Rahmen der vorliegenden Erfindung auch andere Konstruktionen verwenden.

In einer weiteren alternativen Ausführungsform umfasst der Belastungssensor zwei Drehgeber, wobei der erster Drehgeber am Antriebsmotor und der zweite Drehgeber an der Antriebswelle, im Pitchgetriebe oder am drehenden Teil des Rotorblattes angeordnet sind, ein Motorstromsensor zur Bestimmung des Motorstroms des Antriebsmotors vorgesehen ist, die Messwerte des ersten Drehgebers, des zweiten Drehgebers und des Motorstromsensors, einem regelungstechnischen Beobachter zugeführt werden und der regelungstechnische Beobachter die mechanische Belastung bestimmt. Der regelungstechnische Beobachter kann hierbei als Hardwarekomponente oder als Softwarekomponente (Computerprogramm) ausgeführt sein. Der regelungstechnische Beobachter ausgeführt als Computerprogramm kann beispielsweise im Rückführungsmittel angeordnet sein.

Die Erfindung betrifft des Weiteren ein entsprechendes Verfahren zur Antriebsregelung eines Pitchantriebs in einer Windenergieanlage gemäß der vorliegenden Erfindung, wobei der Pitchantrieb über ein Pitchgetriebe mit einem drehbar in der Nabe gelagerten Rotorblatt verbundenen ist, umfassend die Schritte
- Vorgeben eines Soll-Werts für eine Stellung des Rotorblatts,
- Vergleichen eines Ist-Wertes für die Stellung des Rotorblatts mit dem Soll-Wert zur Bildung eines Differenzsignals,
- Ausgabe eines dem Differenzsignal entsprechenden Antriebsmotorsignal, damit der Antriebsmotor ein Drehmoment an der Motorwelle erzeugt,
- Drehen des Rotorblattes über Drehung der Motorwelle um einen Drehwinkel, bis der Soll-Wert für eine Stellung des Rotorblatts erreicht ist, und
- Bestimmen einer mechanischen Belastung der Antriebsmechanik aufgrund eines an die Rotorblätter angreifenden Störmoments mittels mindestens eines Belastungssensors angeordnet im Bereich eines Pitchantriebs und Aussenden eines Sensorsignals durch den Belastungssensor wähernd des Drehens des Rotorblattes, wobei ein auf dem Sensorsignal basierendes bewertetes Drehmomentsignal mittels eines Rückführungsmittels in die Antriebsregelung zurückgeführt wird, vorzugsweise um das Antriebsmotorsignal aufgrund des bewerteten Drehmomentsignals für den daraufhin entsprechend nachgebenden Antriebsmotor zu beeinflussen.

Durch das erfindungsgemäße Verfahren kann eine Windenergieanlage mit Rotorblattverstellung mit erhöhter Lebensdauer, erhöhter Zuverlässigkeit und erhöhter Verfügbarkeit betrieben werden. Hierbei greift die Motorwelle des Antriebsmotors in das Pitchgetriebe ein, damit die Drehmomente der Motorwelle durch das Pitchgetriebe entsprechend zur Antriebswelle für das Rotorblatt übersetzt werden können.

In einer Ausführungsform des Verfahrens wird der Ist-Wert für die Stellung des Rotorblatts aus einem Antriebsmotorpositionssignal oder einem Rotorblattpositionssignal bestimmt, wobei im Fall des Rotorblattpositionssignals das Ausgangssignal des Positionsreglers mit dem rückgeführten bewerteten Drehmomentsignal verglichen und einem Drehmomentregler zur Regelung des Antriebsmotors übergeben wird. Durch diese Regelung wird erreicht, dass der Antriebsmotor bei einem ansteigenden Störmoment nachgibt. Im letzteren Fall reagiert der Antriebsmotor erst gegen die Störmomente, wenn der Soll-Wert für das Drehmoment ein korrigierendes Signal aus dem Positionsregler erhält, der infolge einer nachgebenden Rotorblattposition gemessen wird. Dadurch wird erreicht, dass der Antriebsmotor und das Rotorblatt weitgehend synchron mit einer vorgegebenen Frequenz und gewünschten Dämpfung nachfolgend auf äußere Störmomente reagieren und damit entlastend auf die Übertragungsmechanik der Rotorblattverstellung wirkt.

### Kurze Beschreibung der Abbildungen

Diese und andere Aspekte der Erfindung werden im Detail in den Abbildungen wie folgt gezeigt.
- Fig.1:: eine Ausführungsform einer erfindungsgemäßen Windenergieanlage in einer Übersicht.
- Fig.2:: eine Ausführungsform einer erfindungsgemäßen Antriebsmechanik mit Belastungssensor im Bereich des Pitchantriebs (a) als Übersicht und (b) als Detailansicht des Belastungssensors.
- Fig.3:: eine alternative Ausführungsform einer erfindungsgemäßen Antriebsmechanik mit Belastungssensor auf der Antriebswelle (a) als Übersicht und (b) als Detailansicht des Belastungssensors.
- Fig.4:: eine weitere alternative Ausführungsform einer erfindungsgemäßen Antriebsmechanik mit Belastungssensor mit Drehgebern.
- Fig.5:: eine Ausführungsform einer erfindungsgemäßen Antriebsregelung mit Rückführung eines bewerteten Drehmomentsignals.
- Fig.6:: eine alternative Ausführungsform einer erfindungsgemäßen Antriebsregelung mit Rückführung eines bewerteten Drehmomentsignals.

### Detaillierte Beschreibung der Ausführungsbeispiele

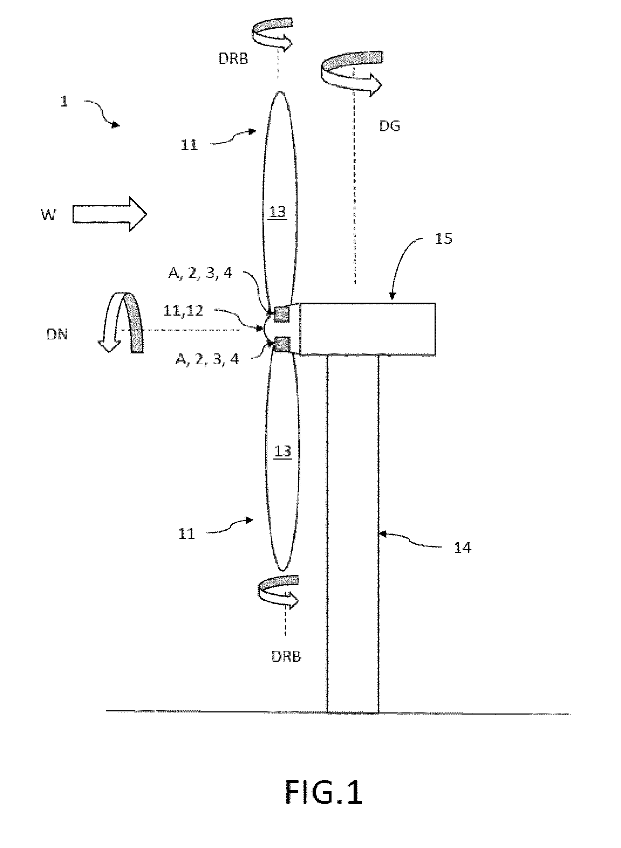

Fig. 1 zeigt eine Ausführungsform einer erfindungsgemäßen Windenergieanlage 1 in einer seitlichen Übersichtsdarstellung. Die Windenergieanlage 1 mit Pitchregelung besteht hier aus mehreren Komponenten umfassend einen Turm 14, der die übrigen Komponenten der Windenergieanlage trägt und im Erdboden verankert ist. Auf dem Turm 14 sind eine um eine Drehachse DG drehbar auf dem Turm 14 gelagerte Gondel 15, ein an der Gondel 15 um eine Drehachse DN drehbar befestigter Rotor 11 mit Nabe 12 und mindestens zwei in der Nabe 12 gelagerten Rotorblätter 13 angeordnet. In dieser seitlichen Darstellung kann die Windenergieanlage 1 zwei Rotorblätter 13 oder drei Rotorblätter 13 umfassen, wobei im letzteren Fall das dritte Rotorblatt 13 von der Nabe 12 verdeckt wird. Die Rotorblätter 13 besitzen im Wind W einen vom Anstellwinkel zum Wind W abhängigen Auftrieb zum Drehen des Rotors 11 um die Drehachse DN, wobei jedes Rotorblatt 13 um seine Längsachse (Drehachse DRB) drehbar in der Nabe 12 gelagert ist, damit der Anstellwinkel jedes Rotorblatts 13 relativ zum Wind W jeweils mittels eines Pitchantriebs 3 über ein Pitchgetriebe 2 eingestellt werden kann. Die Ankopplung des Pitchgetriebes 2 an das Rotorblatt 13 kann beispielsweise über ein in einen Zahnkranz des Rotorblattes 13 eingreifendes Ritzel, das mit dem Pitchgetrieb 3 verbunden ist, vorgenommen werden. Der mittlere Wind W erzeugt im Windbetrieb der Windenergieanlage 1 einen mittleren Auftrieb an den Rotorblättern 13. Dem überlagert sind Störmomente, die durch Windboen (Abweichung von der mittleren Windstärke und ggf. der mittleren Windrichtung) und/oder Turbulenzen (Abweichung von der mittleren Windrichtung und Windstärke), die den Auftrieb an den Rotorblättern verstärken oder verringern können. Über die Rückführung des Störmoments nach Messung durch den Belastungssensor 4 veranlasst die Antriebsregelung des Pitchantriebs 3 ein entsprechendes reagieren des Antriebsmotors (bespielseise ein Nachgeben), der die Rotorblätter 13 in eine Soll-Position bringt oder in der Soll-Position hält. Dieses Nachgeben führt zu einer Verringerung der schädlichen Wirkung dieser Störmomente auf die Komponenten der Antriebsmechanik und verlängert dadurch deren Lebensdauer und damit auch die Verfügbarkeit der Windenergieanlage 1 als solche. Entsprechend sinkt der Wartungsaufwand für diese Komponenten. Jedes der Rotorblätter 13 besitzt hier einen Pitchantrieb 3, ein Pitchgetriebe 2 und einen Belastungssensor 4 zur Rückkopplung eines Sensorsignals in die Antriebsregelung (hier aus Übersichtsgründen nicht im Detail gezeigt), wobei die Antriebsmechanik aus Pitchgetriebe 2, Pitchantrieb 3 und der Belastungssensor 4 in der Nabe 12 angeordnet sind und bei einem Netzausfall aus einem oder mehreren ebenfalls in der Nabe 12 angeordneten Energiespeichern mit elektrischer Energie versorgt werden. Die Pitchantriebe 3 und Energiespeicher drehen sich im Windbetrieb mit der Nabe 12 mit. Geeignete Energiespeicher sind beispielsweise Batterien oder Ultra-Kondensatoren.

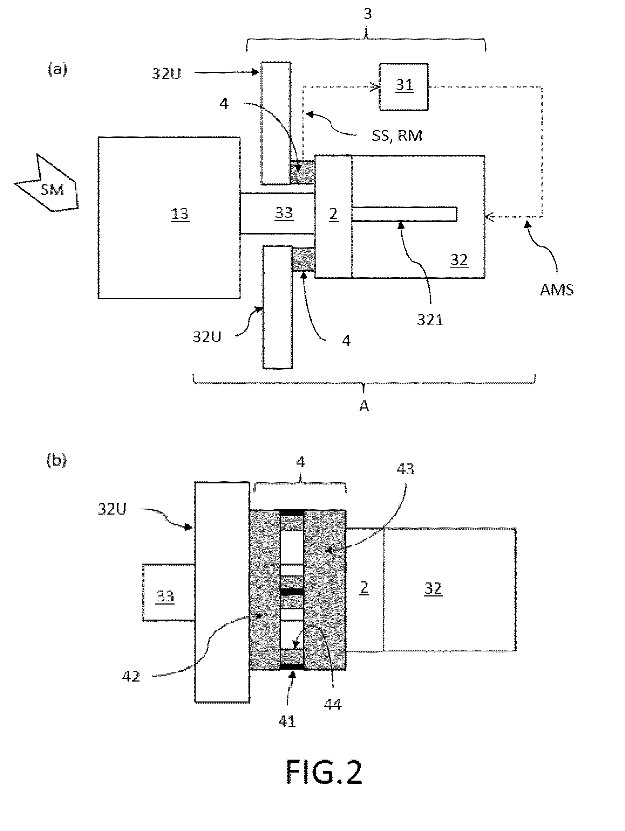

Fig.2 zeigt eine Ausführungsform einer erfindungsgemäßen Antriebsmechanik A mit Belastungssensor 4 im Bereich des Pitchantriebs 3 (a) als Übersicht in seitlichen Schnitt und (b) als Detailansicht des Belastungssensors 4 in Seitenansicht. Der Pitchantrieb 3 umfasst dabei eine Antriebsregelung 31, einen Antriebsmotor 32 mit Motorwelle 321, ein Pitchgetriebe 2 und gegebenenfalls hier nicht gezeigte verbundene weitere Teile der Antriebsmechanik A. Der Antriebsmotor 32 ist hier über das Pitchgetriebe 2 und die Antriebswelle 33 mit dem Rotorblatt 13 verbunden, wobei die Motorwelle 321 des Antriebsmotors 32 in das Pitchgetrieb 2 eingreift und die Drehmomente der Motorwelle 321 entsprechend durch das Pitchgetriebe 2 zur Antriebswelle 33 übersetzt werden. In dieser Ausführungsform ist das Pitchgetriebe 2 auf einer mit der Nabe 12 verbundenen Unterlage 32U fest montiert. In anderen Ausführungsformen könnte die Unterlage 32U auch mit anderen Komponenten des Pitchantriebs 3 verbunden sein. Nach Feststellen einer Differenz zwischen einer Soll/Ist-Stellung des Rotorblattes 13 wird ein entsprechendes Antriebsmoment mit der Motorwelle 321 auf das Pitchgetriebe 2 ausgeübt, bis das Rotorblatt 13 seine Soll-Stellung erreicht hat. Außerdem ist hier mindestens ein Belastungssensor 4 im Bereich des Pitchantriebs 3 zur Bestimmung der mechanischen Belastung der Antriebsmechanik A aufgrund eines auf das Rotorblatt 13 einwirkenden Störmoments SM (angedeutet als Pfeil) angeordnet. Der Belastungssensor 4 sendet ein der mechanischen Belastung entsprechendes Sensorsignal SS an die Antriebsregelung 31 aus. In dieser Ausführungsform umfasst der Belastungssensor 4 ein oder mehrere Dehnmessstreifen 41 und ist zwischen Pitchgetriebe 2 und der Unterlage 32U zur Messung des Reaktionsmoments RM angeordnet. Über eine auf das Rotorblatt 13 als Störmoment SM einwirkende Kraft wird die Antriebswelle 33 und in deren Folge auch das Pitchgetriebe 2 in einer von Störmoment SM abhängenden Art und Weise bewegt, beispielsweise als Drehbewegung oder Verkippung gegenüber der Unterlage 32U. Diese relativen Bewegungen sind die Reaktion auf das Störmoment SM und werden als Reaktionsmoment RM durch die Dehnmessstreifen 41 des Belastungssensors 4 gemessen. In Fig.2(b) ist der Belastungssensor 4 vergrößert und detailierter dargestellt als in Teil (a). In dieser Ausführungsform umfasst der Belastungssensor 4 einen ersten Flansch 42 zur Befestigung an der Unterlage 32U und einen zweiten Flansch 43 zur Befestigung am Pitchgetriebe 2. Erster und zweiter Flansch 42, 43 sind über Verbindungsstege 44 miteinander verbunden, auf denen Dehnmesstreifen 41 (als schwarze Linien dargestellt) aufgebracht sind, beispielsweise sind die Dehnmessstreifen 41 in einer geeigneten Position auf die Verbindungsstege 44 aufgeklebt. Die Flansche 42, 43 sowie die Verbindungsstege 44 sind beispielsweise aus Stahl gefertigt. Als Dehnmessstreifen 41 können handelsübliche Dehnmessstreifen verwendet werden. Die Antriebsregelung 31 beeinflusst aufgrund des Sensorsignals SS das Antriebsmotorsignal AMS derart, dass der Antriebsmotor 32 dem Störmoment SM entsprechend nachgibt. Dadurch wird die Krafteinwirkung des Störmoments SM auf die Antriebsmechanik A gemindert oder im idealen Fall vermieden. Gleichsam werden dadurch hervorgerufene Schwingungen in der Antriebsmechanik A gedämpft.

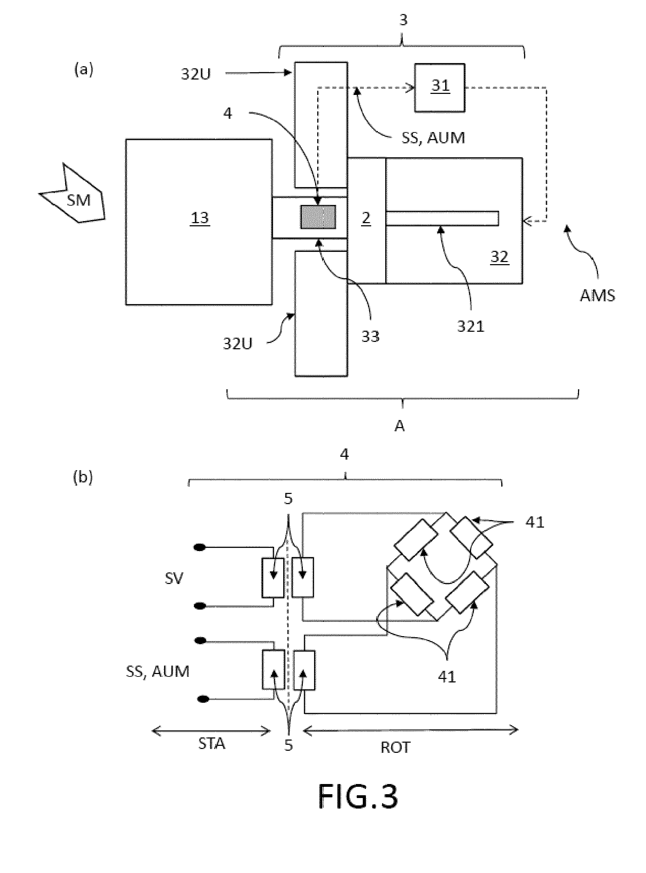

Fig.3 zeigt eine alternative Ausführungsform einer erfindungsgemäßen Antriebsmechanik A mit Belastungssensor 4 auf der Antriebswelle 33 (a) als Übersicht und (b) als Detailansicht des Belastungssensors 4. Der Pitchantrieb 3 umfasst dabei eine Antriebsregelung 31, einen Antriebsmotor 32 mit Motorwelle 321, ein Pitchgetriebe und gegebenenfalls hier nicht gezeigte verbundene weitere Teile der Antriebsmechanik A. Der Antriebsmotor 32 ist hier über das Pitchgetriebe 2 und die Antriebswelle 33 mit dem Rotorblatt 13 verbunden, wobei die Motorwelle 321 des Antriebsmotors 32 in das Pitchgetrieb 2 eingreift und die Drehmomente der Motorwelle 321 entsprechend durch das Pitchgetriebe 2 zur Antriebswelle 33 übersetzt werden. Das Pitchgetriebe 2 ist in dieser Ausführungsform ebenfalls (wie in Fig.2) auf einer mit der Nabe 12 verbundenen Unterlage 32U fest montiert. In anderen Ausführungsformen könnte die Unterlage 32U auch mit anderen Komponenten des Pitchantriebs 3 verbunden sein. Nach Feststellen einer Differenz zwischen einer Soll/Ist-Stellung des Rotorblattes 13 wird ein entsprechendes Antriebsmoment auf das Pitchgetriebe 2 ausgeübt, bis das Rotorblatt 13 seine Soll-Stellung erreicht hat. Außerdem ist hier mindestens ein Belastungssensor 4 auf der Antriebswelle 33 zur Bestimmung der mechanische Belastung der Antriebsmechanik A aufgrund eines auf das Rotorblatt 13 einwirkende Störmoments SM (angedeutet als Pfeil) angeordnet. Der Belastungssensor 4 sendet ein der mechanischen Belastung entsprechendes Sensorsignal SS an die Antriebsregelung 31 aus. In dieser Ausführungsform umfasst der Belastungssensor 4 mehrere Dehnmessstreifen 41 zur Messung des Ausgangsmoments AUM auf der Antriebswelle 33. Über eine auf das Rotorblatt 13 als Störmoment SM einwirkende Kraft wird die Antriebswelle 33 in einer vom Störmoment SM abhängenden Art und Weise bewegt, beispielsweise als Drehbewegung oder Verkippung gegenüber dem Antriebsmotor 32 und der Soll-Stellung der Antriebswelle 33. Diese relativen Bewegungen werden durch den Belastungsssensor 4 gemessen und berührungslos beispielsweise über die Unterlage 32U an die Antriebsregelung 31 als Sensorsignal SS übermittelt. Eine Ausführungsform eines Belastungssensor 4 mit berührungsloser elektrischen Versorgung SV der Dehnmessstreifen 41 und berührungslosem Abgriff des Sensorsignals SS berührungslos über eine Transformatordrehübertragung 5 ist in Fig.3(b) im Detail dargestellt. Der Belastungssensor ist dabei in einen statischen (nicht-rotierenden) Teil STA und in einen rotierenden Teil ROT unterteilt, an deren Grenzfläche die Transformatordrehübertragungen 5 zur Stromversorgung SV des rotierenden Teils ROT und zum Abgriff der Sensordaten zur Aussendung eines Sensorsignals SS als Ausgangsmoment AUM angeodnet sind. Die Dehnmessstreifen 41 sind zur Messung der mechanischen Belastung der Antriebswelle 33 als Vollbrücke angeordnet und können somit die Schubdehnung auf der Antriebswelle 33 ermitteln, die ein Maß für das Ausgangsmoment AUM ist. Alternativ können der Datenabgriff und die Stromversorgung auch über einen Schleifringüberträger erfolgen. Die Antriebsregelung 31 beeinflusst aufgrund des Sensorsignals SS das Antriebsmotorsignal AMS derart, dass der Antriebsmotor 32 dem Störmoment SM entsprechend nachgibt. Dadurch wird die Krafteinwirkung des Störmoments SM auf die Antriebsmechanik A gemindert oder im idealen Fall vermieden. Gleichsam werden dadurch hervorgerufene Schwingungen in der Antriebsmechanik A gedämpft.

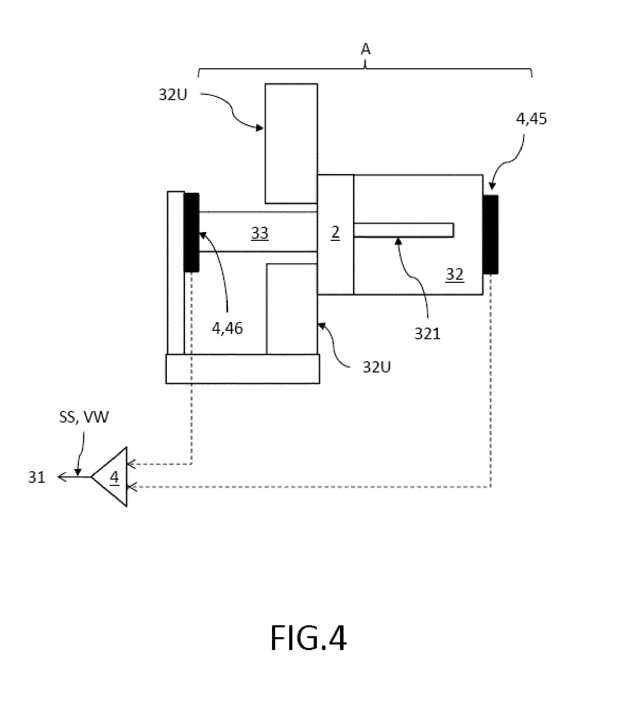

Fig.4 zeigt eine weitere alternative Ausführungsform einer erfindungsgemäßen Antriebsmechanik A mit Belastungssensor 4 umfassend zwei Drehgeber 45, 46. Die Ankopplung des Pitchgetriebes 2 an das Rotorblatt 13, beispielsweise über ein in einen Zahnkranz eingreifendes Ritzel, und das angreifende Störmoment SM sind hier nicht im Detail gezeigt. Es gelten aber prinzipiell die gleichen Bemerkungen wie voranstehend zu den Figuren 2 und 3 ausgeführt. Der erste Drehgeber 45 ist dabei am Antriebsmotor 32 und der zweite Drehgeber 46 an der Antriebswelle 33 angeordnet. Alternativ kann der zweite Drehgeber 46 auch am drehenden Teil des Rotorblattes 13 angeordnet sein. Die mechanische Belastung, die als Sensorsignal SS an die Antriebsregelung 31 übermittelt wird, wird aus einem relativen Verdrehwinkel VW zwischen den Drehgebern 45, 46 bestimmt. Bei vorhandenen Drehmomenten (Antriebsmoment, Störmoment, Drehmoment des Rotorblatts) entsteht eine elastische Verdrehspannung in den mechanischen Übertrangungselementen von der Antriebswelle 33 bis zum Rotorblatt 13, welche dem Verdrehwinkel VW entspricht. Dieser Verdrehwinkel VW wird durch das Störmonent SM zeitlich beeinflusst und weicht von einem erwarteten Verdrehwinkel ohne Störmoment ab. So kann aus dem tatsächlichen Verdrehwinkel VW das Störmoment SM gemessen werden. Die Antriebsregelung 31 beeinflusst aufgrund des Sensorsignals SS das Antriebsmotorsignal AMS derart, dass der Antriebsmotor 32 dem Störmoment SM entsprechend nachgibt. Dadurch wird die Krafteinwirkung des Störmoments SM auf die Antriebsmechanik A gemindert oder im idealen Fall vermieden. Gleichsam werden dadurch hervorgerufene Schwingungen in der Antriebsmechanik A gedämpft.

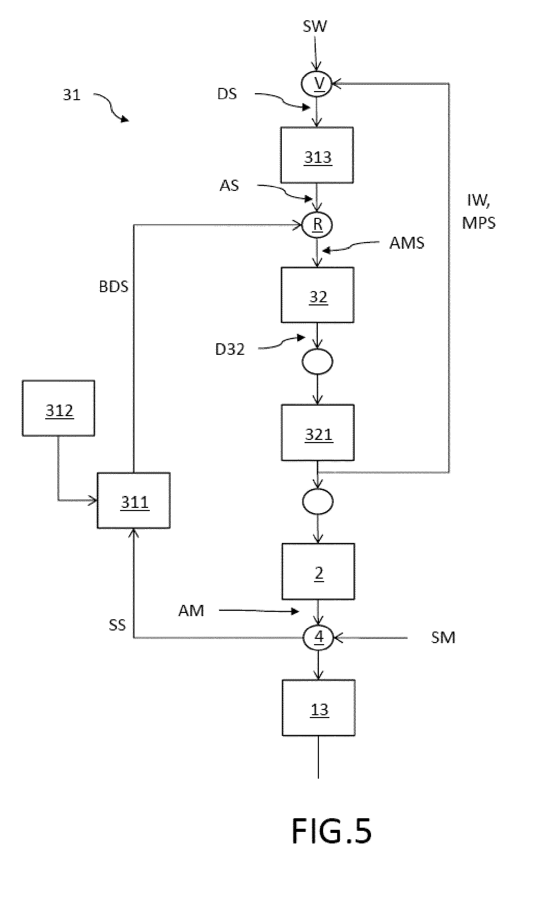

Fig.5 zeigt eine Ausführungsform einer erfindungsgemäßen Antriebsregelung 31 mit Rückführung R eines bewerteten Drehmomentsignals BDS. Von einem übergeordneten System, beispielsweise nach einer Aufforderung, elektrische Energie in ein Stromnetz einzuspeisen, wird ein Signal eines Soll-Wertes SW für die Rotorblattstellung als Eingangsgröße in der Antriebssteuerung 31 vorgegeben. Dieses Soll-Wert-Signal SW wird mit dem Signal des Ist-Wertes IW, der die tatsächliche Rotorblattsteuerung angibt, verglichen V (als Kreis in der Schrittabfolge dargestellt). In dieser Ausführungsform entspricht das Ist-Wert-Signal IW für die Stellung des Rotorblatts 13 dem Antriebsmotorpositionssignal MPS. Ein Differenzsignal DS aus der Differenz zwischen Ist-Wert IW und Soll-Wert SW wird in einen Positionsregler 313 eingegeben, der eine frequenzabhängige Verstärkung dieses Signals vornimmt, und ein entsprechendes Ausgangssignal AS aussendet. Dieses Ausgangssignal wird mit einem bewerteten Drehmomentsignal BDS durch Rückführung R verglichen und als entsprechendes Antriebsmotorsignal AMS an den Antriebsmotor 32 übergeben. Das bewertete Drehmomentsignal BDS basiert auf der durch einen Belastungssensor 4 gemessenen Belastung der Antriebsmechanik A infolge eines an das Rotorblatt 13 angreifenden Störmonents SM. Der Belastungssensor 4 sendet ein entsprechedes Sensorsignal SS an das Rückführungsmittel 311 aus, wo das Sensorsignal SS frequenz- und amplitudenabhängig ausgewertet wird. Für eine Berücksichtigung von Schwingungseffekten umfasst das Rückführungsmittel 311 einen separaten Dämpfungsregler 312, dessen Ausgang ebenfalls in das bewertete Drehmomentsignal BDS einfließt. Somit steht bereits im Vergleichspunkt R (Rückführung) der Antriebsregelung 31 die Information zur Verfügung, dass zusätzliche Belastungen für die Antriebsmechanik auftreten und welche Größe diese haben. Störmomente SM werden beispielsweise durch eine schwankende Windgeschwindigkeit am Rotorblatt 13 verursacht. Durch die Rückführung R des bewerteten Drehmomentsignals BDS wird bewirkt, dass ein angreifendes Störmoment SM am Rotorblatt 13 ein gleichartiges Drehmoment am Antriebsmotor 32 entstehen lässt. Somit können die angreifenden Störmomente SM vom Pitchantrieb 3 mit der gewünschten Stellgeschwindigkeit durch Ausgleichsbewegungen an der Motorwelle 321 kompensiert werden. Die Antriebsmotorpositionsregelung mittels des Antriebsmotorpositionssignals MPS, die Trägheit der Antriebsmechanik A und die Reibung bewirken Drehmomente, die gegen das Störmoment SM gerichtet sind. Die Drehmomente, die durch Reibung entstehen, sind in dieser Darstellung nicht explizit gezeigt. Durch geeignete frequenzabhängige Bewertung und Rückführung des Sensorsignals SS in dem Rückführungsmittel 311 wird erreicht, dass der Antriebsmotor 32 auf die angreifenden Störmomenten SM soweit reagiert, dass die Drehmassen durch die Verspannungen in den mechanischen Übertragungselementen der Antriebsmechanik A weniger oder gar nicht zum Schwingen angeregt werden oder gut gedämpft ausschwingen. Bei einer unerwartet abfallenden Belastung kann der Antriebsmotor 32 als Reaktion mehr Kraft ausüben, um das letztendlich wirkende Drehmoment möglichst konstant zu halten. Bei einer zu starken Belastung reagiert der Antriebsmotor 32 dagegen nachgebend. Auch die sprunghaften Belastungsspitzen bei Richtungsänderungen der Drehmomente bei vorhandenen mechanischen Spielen in den Übertragungsgliedern und Getrieben werden durch diese Rückführung R abgemildert, weil der Antriebsmotor 32 den Kräften nachgibt. Der Antriebsmotor 32 erzeugt ein Drehmoment D32 des Antriebsmotors 32 an der Motorwelle 321. Das Antriebsmoment AM wirkt vom Ausgang des Pitchgetriebes 2 zurück und steht dem Antriebsmotordrehmoment D32 entgegen. Die auf die Motorwelle 321 wirkenden Drehmomente D32 und AM erzeugen ein Gesamtdrehmoment, welches die Motorwelle 321 des Antriebsmotors 32 beschleunigt und zu einer Änderung des Verdrehwinkels der Motorwelle 321 führt. Aus der Differenz des Verdrehwinkels der Motorwelle 321 am Antriebsmotor 32 und dem Verdrehwinkel des Rotorblatts 13 entsteht eine Verdrehspannung in den mechanischen Übertragungselementen der Antriebsmechanik A von der Motorwelle 321 bis zum Rotorblatt 13, welche das Antriebsmoment AM am Ausgang des Pitchgetriebes 2 bewirkt. Dem Antriebsmoment AM am Abtrieb des Pitchgetriebes 2 werden äußere Drehmomente vom Rotorblatt 13 (Störmomente SM) überlagert. Das auf das Rotorblatt 13 wirkende Gesamtdrehmoment ergibt sich aus der Summe der Drehmomente und beschleunigt das Rotorblatt 13, was zu einer Änderung der Rotorblattposition führt.

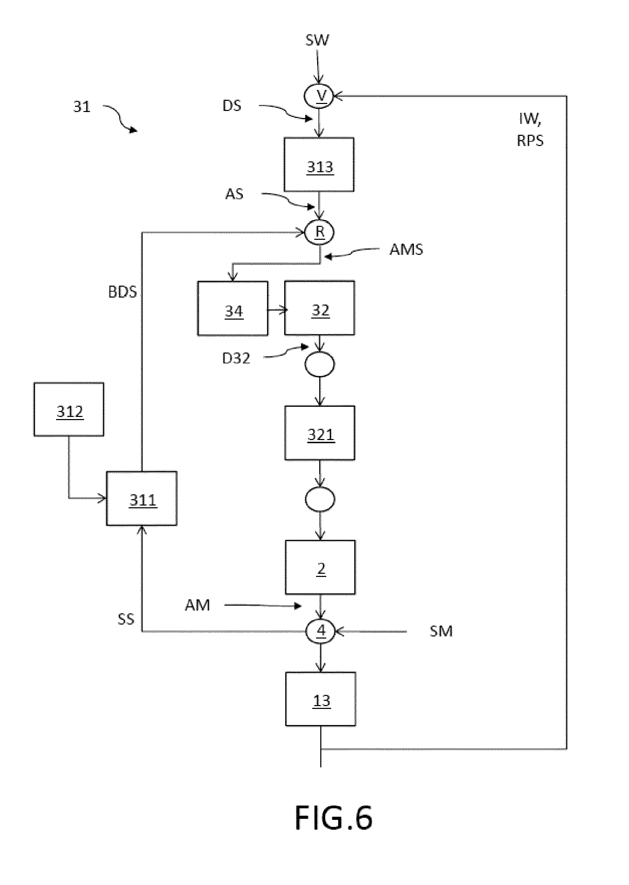

Fig.6 zeigt eine alternative Ausführungsform einer erfindungsgemäßen Antriebsregelung mit Rückführung R eines bewerteten Drehmomentsignals BDS. Dieses Konzept kann vorzugsweise angewendet werden, wenn die Position der Rotorblattverstellung nicht unmittelbar am Antriebsmotor 32 (wie in Fig.5) dargestellt), sondern an einem drehbaren Teil, welches mit der Drehung des Rotorblattes 13 in weniger elastischer Verbindung steht, gemessen wird. Hierbei wird im Gegensatz zu Fig.5 der Ist-Wert IW für die Stellung des Rotorblatts 13 aus einem Rotorblattpositionssignal RPS bestimmt, wobei das Ausgangssignal AS des Positionsreglers 313 mit dem rückgeführten bewerteten Drehmomentsignal BDS verglichen R und einem Drehmomentregler 34 zur Regelung des Antriebsmotors 32 übergeben wird. Der Drehmomentregler 34 nimmt eine frquenzabhängige Verstärkung des Vergleichswertes vor und bietet diesen Wert einem weiteren inneren Stromregelkreis oder einem weiteren inneren Motordrehzahlregelkreis (nicht explizit hier gezeigt) an. Diese Regelkreise sind hier nicht im Einzelnen dargestellt, da sie dem Stand der Technik entsprechen. Für die übrigen Regelungsschritte wird auf Fig.5 verwiesen. Auch durch diese Regelung wird erreicht, dass der Antriebsmotor 32 bei einem ansteigenden Störmoment SM nachgibt. Erst wenn der Soll-Wert SW für das Drehmoment ein korrigierendes Signal aus dem Positionsregler 313 erhält, der infolge einer nachgebenden Rotorblattposition RPS gemessen wird, reagiert der Antriebsmotor 32 gegen die Störmomente SM.

Durch eine systematische Einstellung einer der gezeigten Regelkreise (Fig.5 +6) wird erreicht, dass der Antriebsmotor 32 und das Rotorblatt 13 weitgehend synchron mit einer vorgegebenen Frequenz und gewünschten Dämpfung nachgebend auf äußere Störmomente SM reagieren und damit entlastend auf die Übertragsungselemente der Antriebsmechanik A der Rotorblattverstellung wirken.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: Windenergieanlage
- 11: Rotor
- 12: Nabe
- 13: Rotorblatt
- 14: Turm
- 15: Gondel
- 2: Pitchgetriebe
- 3: Pitchantrieb
- 31: Antriebsregelung
- 311: Rückführungsmittel
- 312: Dämpfungsregler
- 313: Positionsregler
- 32: Antriebsmotor
- 32U: Unterlage zur Befestigung des Pitchantriebs
- 321: Motorwelle
- 33: Antriebswelle
- 34: Drehmomentregler
- 4: Belastungssensor
- 41: Dehnmessstreifen
- 42: erster Flansch
- 43: zweiter Flansch
- 44: Verbindungsstege
- 45: erster Drehgeber
- 46: zweiter Drehgeber
- 5: Transformatordrehübertragung

- A: Antriebsmechanik
- AM: Antriebsmoment
- AMS: Antriebsmotorsignal
- AS: Ausgangssignal Positionsregler
- AUM: Ausgangsmoment
- BDS: bewertetes Drehmomentsignal
- D32: Drehmoment Antriebsmotor
- DMA: Drehmoment Antriebsmotor
- DG: Drehachse Gondel
- DN: Drehachse Nabe
- DRB: Drehachse Rotorblatt
- DS: Differenzsignal
- IW: Ist-Wert, Ist-Wert-Signal
- MPS: Antriebsmotorpositionssignal
- R: Rückführung des bewerteten Dremomentsignals
- RM: Reaktionsmoment
- ROT: rotierender Teil des Belastungssensors
- RPS: Rotorblattpositionssignal
- SM: Störmoment
- SS: Sensorsignal
- STA: statischer (nicht-rotierender) Teil des Belastungsensors
- SV: Stromversorgung Belastungssensor
- SW: Soll-Wert, Soll-Wert-Signal
- V: Vergleich Ist-Wert zu Soll-Wert
- VW: Verdrehwinkel
- W: Wind

## Patentansprüche

1. Eine Windenergieanlage (1) umfassend einen Rotor (11) mit Nabe (12) und mindestens ein um seine Längsachse (DRB) drehbar in der Nabe (12) gelagertes Rotorblatt (13), wobei der Anstellwinkel jedes Rotorblatts (13) relativ zum Wind (W) mittels eines über eine Antriebswelle (33) mit dem Rotorblatt verbundenen Pitchantriebs (3) umfassend eine Antriebsregelung (31), ein Antriebsmotor (32), ein Pitchgetriebe und damit verbundene weitere Teile der Antriebsmechanik (A) über Ausübung eines einer festgestellten Differenz zwischen einer Soll/Ist-Stellung des Rotorblattes (13) entsprechenden Antriebsmoments (AM) auf das Pitchgetriebe (2) eingestellt werden kann, wobei mindestens ein Belastungssensor (4) im Bereich des Pitchantriebs (3) zur Bestimmung einer mechanische Belastung der Antriebsmechanik (A) aufgrund eines Störmoments (SM) angeordnet und zur Aussendung eines der mechanischen Belastung entsprechenden Sensorsignals (SS) vorgesehen ist und die Antriebsregelung (31) ein Rückführungsmittel (311) zur Rückführung (R) eines gemäß des Sensorsignals (SS) bewerteten Drehmomentsignals (BDS) umfasst.

2. Die Windenergieanlge (1) nach Anspruch 1, **dadurch gekennzeichnet, dass** das Rückführungsmittel (311) zur Beeinflussung eines Antriebsmotorsignals (AMS) aufgrund des bewerteten Drehmomentsignals (DBS) für den daraufhin entsprechend reagierenden Antriebsmotor (32) ausgestaltet ist.

3. Die Windenergieanlage (1) nach Anspruch 1 oder 2, **dadurch gekennzeichnet, dass** das Rückführungsmittel (311) aus dem Sensorsignal (SS) ein bewertetes Drehmomentsignal (BDS) unter Berücksichtigung des Störmoments (SM) ableitet und dieses direkt oder indirekt zu einem Drehmoment (D32) des Antriebsmotors (32) hinzu addiert.

4. Die Windenergieanlage (1) nach Anspruch 3, **dadurch gekennzeichnet, dass** das Rückführungsmittel (311) das Sensorsignal (SS) frequenz- und amplitudenabhängig auswertet.

5. Die Windenergieanlage (1) nach einem der voranstehenden Ansprüche, **dadurch gekennzeichnet, dass** das Rückführungsmittel (311) einen separaten Dämpfungsregler (312) umfasst.

6. Die Windenergieanlage (1) nach einem der voranstehenden Ansprüche, **dadurch gekennzeichnet, dass** die Differenz zwischen einer Soll/Ist-Stellung des Rotorblattes (13) aus der Stellung der Motorwelle (321) bestimmt und ein Differenzsignal (DS) einem Positionsregler (313) in der Antriebsregelung (31) zugeführt wird.

7. Die Windenergieanlage (1) nach einem der Ansprüche 1 bis 5, **dadurch gekennzeichnet, dass** die Differenz zwischen einer Soll/Ist-Stellung des Rotorblattes (13) aus der Stellung des Rotorblattes (13) bestimmt wird und ein Differenzsignal (DS) einem Positionsregler (313) in der Antriebsregelung (31) zugeführt wird, das Ausgangssignal (AS) des Positionsreglers (313) mit dem rückgeführten bewerteten Drehmomentsignal (BDS) verglichen und einem Drehmomentregler (34) zur Regelung des Antriebsmotors (32) übergeben wird.

8. Die Windenergieanlage (1) nach einem der voranstehenden Ansprüche, **dadurch gekennzeichnet, dass** die Antriebsregelung (31) ein Vergleichsmittel umfasst, das das Sensorsignal (SS) mit einem Motorstrom des Antriebsmotors (32) vergleicht.

9. Die Windenergieanlage (1) nach einem der voranstehenden Ansprüche, **dadurch gekennzeichnet, dass** die Antriebsregelung (31) mit weiteren Regeleinrichtungen der Windenergieanlage (1) zur Bereitstellung des Sensorsignals (SS) an diese Regeleinrichtungen verbunden ist.

10. Die Windenergieanlage (1) nach einem der voranstehenden Ansprüche, **dadurch gekennzeichnet, dass** der Belastungssensor (4) ein oder mehrere Dehnmessstreifen (41) umfasst und zwischen Antriebsmotor (32) und einer mit der Nabe (12) verbundenen Unterlage (32U) des Pitchantriebs (3) zur Messung eines Reaktionsmoments (RM) angeordnet ist, vorzugsweise umfasst dabei der Belastungssensor (4) einen ersten Flansch (42) zur Befestigung an der Unterlage (32U) des Pitchantriebs (3) und einen zweiten Flansch (43) zur Befestigung am Pitchantrieb (3) und Verbindungsstege (44) zwischen dem ersten und zweiten Flansch (42, 43), auf denen Dehnmesstreifen (41) aufgebracht sind.

11. Die Windenergieanlage (1) nach einem der voranstehenden Ansprüche, **dadurch gekennzeichnet, dass** der Belastungssensor (4) ein oder mehrere Dehnmessstreifen (41) umfasst und auf der Antriebswelle (33) zur Messung eines Ausgangsmoments (AUM) der Antriebswelle (33) angeordnet ist, vorzugsweise erfolgt eine elektrische Versorgung der Dehnmessstreifen (41) und der Abgriff des Sensorsignals (33) berührungslos über eine Transformatordrehübertragung (5) oder über einen Schleifringüberträger.

12. Die Windenergieanlage (1) nach einem der voranstehenden Ansprüche, **dadurch gekennzeichnet, dass** der Belastungssensor (4) zwei Drehgeber (45, 46) umfasst, wobei der erster Drehgeber (45) am Antriebsmotor (32) und der zweite Drehgeber (46) an der Antriebswelle (33), im Pitchgetriebe (2) oder am drehenden Teil des Rotorblattes (13) angeordnet sind und die mechanische Belastung aus einem relativen Verdrehwinkel (VW) zwischen den Drehgebern (45, 46) bestimmt wird.

13. Die Windenergieanlage (1) nach einem der voranstehenden Ansprüche, **dadurch gekennzeichnet, dass** der Belastungssensor (4) zwei Drehgeber (45, 46) umfasst, wobei der erster Drehgeber (45) am Antriebsmotor (32) und der zweite Drehgeber (46) an der Antriebswelle (33), im Pitchgetriebe (2) oder am drehenden Teil des Rotorblattes (13) angeordnet sind, ein Motorstromsensor zur Bestimmung des Motorstroms des Antriebsmotors (32) vorgesehen ist, die Messwerte des ersten Drehgebers (45), des zweiten Drehgebers (46) und des Motorstromsensors, einem regelungstechnischen Beobachter zugeführt werden und der regelungstechnische Beobachter die mechanische Belastung bestimmt.

14. Verfahren zur Antriebsregelung eines Pitchantriebs (3) in einer Windenergieanlage (1) nach Anspruch 1, wobei der Pitchantrieb (3) über ein Pitchgetriebe (2) mit einem drehbar in der Nabe (12) gelagerten Rotorblatt (13) verbundenen ist, umfassend die Schritte
- Vorgeben eines Soll-Werts (SW) für eine Stellung des Rotorblatts (13),
- Vergleichen eines Ist-Wertes (IW, MPS, RPS) für die Stellung des Rotorblatts (13) mit dem Soll-Wert (SW) zur Bildung eines Differenzsignals (DS),
- Ausgabe eines dem Differenzsignal entsprechenden Antriebsmotorsignal (AMS), damit der Antriebsmotor (32) ein Drehmoment (D32) an einer Motorwelle (321) erzeugt,
- Drehen des Rotorblattes (13) über Drehung der Motorwelle (321) um einen Drehwinkel, bis der Soll-Wert (SW) für eine Stellung des Rotorblatts (13) erreicht ist, und
- Bestimmen einer mechanischen Belastung der Antriebsmechanik (A) aufgrund eines an die Rotorblätter (13) angreifenden Störmoments (SM) mittels mindestens eines Belastungssensors (4) angeordnet im Bereich eines Pitchantriebs (3) und Aussenden eines Sensorsignals (SS) durch den Belastungssensor (4) wähernd des Drehens des Rotorblattes (13), wobei ein auf dem Sensorsignal (SS) basierendes bewertetes Drehmomentsignal (BDS) mittels eines Rückführungsmittels (311) in die Antriebsregelung (31) zurückgeführt (R) wird, vorzugsweise um das Antriebsmotorsignal (AMS) aufgrund des bewerteten Drehmomentsignals (BDS) für den daraufhin entsprechend reagierenden Antriebsmotor (32) zu beeinflussen.

15. Verfahren nach Anspruch 14, wobei der Ist-Wert für die Stellung des Rotorblatts (13) aus einem Antriebsmotorpositionssignal (MPS) oder einem Rotorblattpositionssignal (RPS) bestimmt wird, wobei im Fall des Rotorblattpositionssignals (RPS) das Ausgangssignal (AS) des Positionsreglers (313) mit dem rückgeführten bewerteten Drehmomentsignal (BDS) verglichen und einem Drehmomentregler (34) zur Regelung des Antriebsmotors (32) übergeben wird.
